# EUROPEAN PATENT SPECIFICATION

(11) **EP 0 639 399 B1**
(45) Date of publication and mention of the grant of the patent: **14.01.1998**
(21) Application number: 94305695.2
(22) Date of filing: 01.08.1994
(51) Int. Cl.: B01D 53/047, B01D 53/70, A62D 3/00

(54) **Process for treatment of by-product gaseous mixture resulting from the reaction of methyl chloride with silicon**
Verfahren zur Behandlung des bei der Reaktion von Methylchlorid und Silizium anfallenden gasförmigen Nebenproduktgemisches
Procédé pour le traitement du mélange gazeux de sous-produits provenant de la réaction de chlorure de méthyle avec silicium

(30) Priority: 06.08.1993 US 103473
(43) Date of publication of application: 22.02.1995
(73) Proprietor: DOW CORNING CORPORATION, Midland, Michigan 48686-0994 (US)
(72) Inventor: Halm Roland Lee, Madison, Indiana (US); Okeson, Kevin James, Carrolton, Kentucky (US); Worden, Richard Glen, Fareham, Hants (GB)
(74) Representative: Bullows, Michael

(56) References cited:
- CA-A- 2 069 380
- US-A- 3 225 518

## Description

The present invention is a process for the treatment of a by-product gaseous mixture resulting from the reaction of methyl chloride with silicon to form methylchlorosilanes. The process employs pressure swing adsorption to separate the by-product gases into a gaseous mixture enriched in methyl chloride content and a gas reduced in methyl chloride content. The gaseous mixture enriched in methyl chloride content is thermally oxidized. The gaseous mixture reduced in methyl chloride content can be used as a fuel source or used as a feed to another process. An advantage of the present process is that, by separating the methyl chloride from other combustible gases, it is possible to thermally oxidize greater quantities of methyl chloride, per unit time, for a given size thermal oxidizer.

The direct process for the production of methylchlorosilanes, as first described by Rochow, US-A 2,380,995 involves the reaction of methyl chloride with silicon in the presence of a suitable catalyst. A typical by-product of this process is a gaseous mixture comprising methyl chloride, methane, hydrogen, nitrogen and residual chlorosilanes. Federal and State environmental regulations require that by-product gases from chemical processes be controlled using environmentally sound methods. Typically, gases such as methane, hydrogen and nitrogen can be vented into the atmosphere without further treatment. However, chlorinated hydrocarbons, such as methyl chloride, are not considered environmentally safe and cannot be freely vented to the atmosphere.

Thermal oxidation of the by-product gaseous mixture from the direct process is considered an environmentallysound method for disposing of methyl chloride and other gases. However, in practice, the methyl chloride may only comprise a minor component of the total combustible content of the by-product gaseous mixture. The capacity of a thermal oxidizer to thermally oxidize by-product gases is limited by the thermal load the thermal oxidizer is designed to handle. Therefore, by separating the methyl chloride from other combustible gases, it is possible to thermally oxidize greater quantities of methyl chloride, per unit time, for a given size thermal oxidizer.

It is known that organic vapors can be recovered by passing the gas stream through an adsorbent bed containing a substance, such as activated carbon, to adsorb the vapors. It is also known to desorb the organic vapor from the bed by maintaining a steady temperature in the bed and lowering pressure within the bed. Known systems are described, for example, in US-A 3,225,518; US-A 4,056,369 and CZ-A 89396.

Shen et al., **Pollution Engineering,** Oct. 1978, p. 46/47, even describes a process for the incineration of "silicone waste products, mainly chlorosilanes."

CA-A-2069380 shows the adsorption of methyl chloride out of a gas containing methane.

The cited documents do not recognize the advantages that can be achieved, when thermal oxidation is the selected method of disposing of methyl chloride, by partially or totally separating the methyl chloride from the other combustible gases and thermally oxidizing the gas enriched in methyl chloride separately.

The present invention provides a process for treatment of the by-product gaseous mixture resulting from the reaction of methyl chloride with silicon to form organochlorosilanes. This by-product gaseous mixture typically comprises methyl chloride, methane, hydrogen, nitrogen and lessor amounts of chlorosilanes, ethane and other hydrocarbons.

Our process uses pressure swing adsorption to separate the by-product gaseous mixture into a gaseous component enriched in the environmentally hazardous methyl chloride and a component reduced in methyl chloride content. Typically, the gas reduced in methyl chloride content is comprised of gases such as methane, hydrogen and nitrogen which can be used as a fuel source or as a feed to another process. The gaseous mixture enriched in methyl chloride content is then disposed of by thermal oxidation.

The principal advantage of the present process is that it allows for more efficient use of a thermal oxidizer, by providing a feed gas enriched in methyl chloride and reduced in other gases. These latter gases would otherwise contribute to the design thermal load of the thermal oxidizer. Therefore, less capacity of the thermal oxidizer is used in the combustion of other combustible gases, leaving more capacity free for the thermal oxidation of methyl chloride.

The process for treatment of a by-product gaseous mixture resulting from the reaction of silicon with methyl chloride to form methyl choride silanes of our invention comprises:
(A) contacting the by-product gaseous mixture with an adsorbent capable of reversibly adsorbing the methyl chloride, to provide a gas reduced in methyl chloride,
(B) lowering pressure of the by-product gaseous mixture in contact with the adsorbent to effect desorption of a gaseous mixture enriched in methyl chloride, and
(C) thermally oxidizing the gaseous mixture enriched in methyl chloride.

Figure 1 illustrates the configuration of an apparatus suitable for separating a by-product gaseous mixture into a gaseous mixture enriched in methyl chloride content and a gas reduced in methyl chloride content.

Figure 2 illustrates the configuration of an apparatus suitable for the thermal oxidation of the gaseous mixture enriched in methyl chloride content.

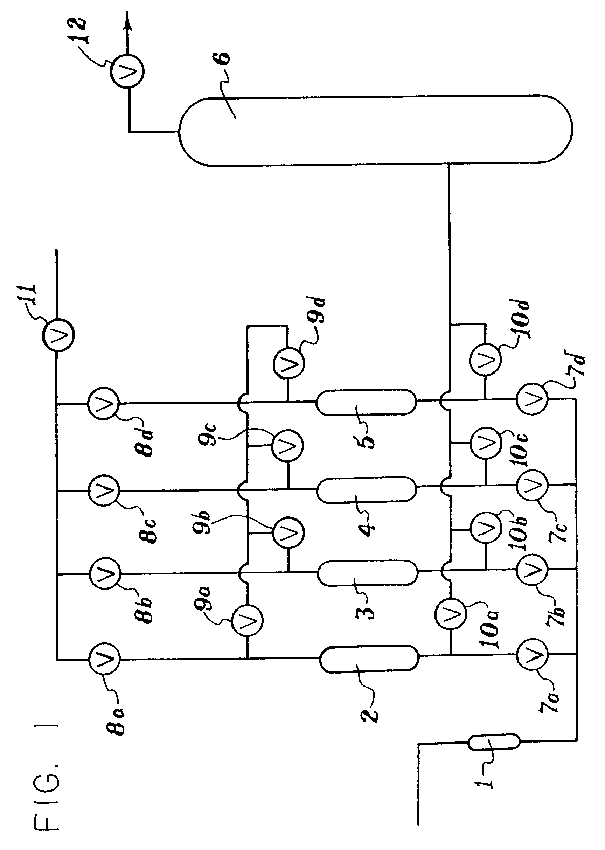

Contact of the gaseous mixture, resulting from the reaction of silicon with methyl chloride, with an adsorbent capable of reversibly adsorbing methyl chloride can be effected in any standard apparatus for contacting a gas with a solid under pressure. Figure 1 represents a useful configuration of such an apparatus and is provided by way of example.

Referring to Figure 1, a by-product gaseous mixture is fed to pre-filter **1**. The purpose of pre-filter **1** is to remove hydrolyzable silanes present in the by-product gaseous mixture. Pre-filter **1** can be loaded with any material capable of removing hydrolyzable silanes from the by-product gaseous mixture, such as, activated carbon or hydrated silica gel. Pre-filter **1** is consider optional and the process can be run with or without pre-filter **1**.

The pre-filtered by-product gaseous mixture is fed through flow regulators **7a** through **7d** to adsorption columns **2** through **5**. Flow regulators **7a** through **7d** are controlled by standard means to allow sequential operation of adsorption columns **2** through **5**. The number of adsorption columns employed in the process is not critical, however, it is preferred that at least two adsorption columns be employed, since this allows for continuous operation of our process. Generally, the number of columns used in the process is determined by the quantity of adsorbent contained in each column, the quantity of methyl chloride to be recovered, rate of by-product gas flow through the column and the adsorption/desorption rate of methyl chloride on the adsorbent. Standard means for sequencing flow of gases to columns can be used for the sequencing process. The column sequencing is effected such that, as the adsorption capacity of one column for methyl chloride is nearly saturated, the by-product gaseous mixture flow is switched to another adsorption column and desorption of the nearly saturated adsorption column is then effected.

Adsorption columns **2** through **5** contain a packedbed of an adsorbent that is capable of reversibly adsorbing methyl chloride. The preferred adsorbent is silica gel. In a typical process, the by-product gaseous mixture is fed to adsorption columns **2** through **5** at an adsorption pressure sufficient to effect adsorption of methyl chloride. When the adsorbent is silica gel, a useful adsorption pressure is within a range of 0.8 to 3.1 MPa (125 to 450 psi) gauge pressure. A preferred adsorption pressure is within a range of 1.0 to 2.1 MPa (150 to 300 psi) gauge pressure.

The optimal temperature of the by-product gaseous mixture fed to adsorption columns **2** through **5** is dependent upon the particular adsorbent used in the column. When the adsorbent is silica gel, it is preferred that the temperature be within a range of 10°C. to 300°C. Lower temperatures may be used, but at temperatures below 10°C., methane strongly adsorbs to silica gel and the separation of methyl chloride from methane is decreased. At temperatures above 300°C., the silica gel may deteriorate. A more preferred temperature is within a range of 24°C. to 65°C.

The by-product gaseous mixture fed to columns **2** through **5** is separated into a gas component which passes through the column and is reduced in methyl chloride content. This gas component reduced in methyl chloride passes through one of regulators **8a** through **8d**, depending on which column is receiving the by-product gaseous mixture. The gas component reduced in methyl chloride can be used as a fuel source or used as a feed to another process. The by-product gaseous mixture fed to columns **2** through **5** is also separated into a component which adsorbs to the adsorbent. When the adsorbent is silica gel, the adsorbed component comprises methyl chloride, methane and minor levels of other hydrocarbons. Desorption of the methyl chloride and other adsorbed gases results in a gaseous mixture enriched in methyl chloride, when compared to the feed by-product gaseous mixture.

Desorption of the adsorbent is effect by lowering the pressure within the adsorption column. When the adsorbent is silica gel, a useful desorption pressure is within a range of 0 to 206.8 kPa (0 to 30 psi) gauge pressure. Referring to Figure 1, by way of example, the desorption of adsorption column **2** is effected by first closing valves **7a** and **8a**. Valves **9a** and **9c** are then opened to partially pressurize column **4**. At the same time, valve **7b** and **8b** are opened to effect separation of by-product gas in column **3**. Valve **9c** is then closed and valve **9d** and **10d** opened. A portion of the gas in column **2** is passed through column **5** to effect desorption of column **5**. Valves **9c**, **9d** and **10d** are then closed. Valve **10a** is then opened to vent any remaining pressure in column **2** to surge tank **6**. Next, valves **9b** and **9a** are opened. The gas which flows from column **3** through column **2** effects desorption of column **2** at a pressure within a range of 0 to 206.8 kPa (0 to 30 psi) gauge pressure. When the desorption is complete, valves **9a**, **9b** and **10a** are closed. Valve **9c** is opened to partially repressurize column **2** using gas from column **4**.
Pressurization of column **2** back to adsorption pressure is completed by opening valve **8a** and allowing part of the vent gas from column **5** to enter column **2**.

The adsorption and desorption of methyl chloride in adsorption columns **3** through **5** are performed similarly by operation of the appropriate valves. Those skilled in the art will recognize that the valving can be controlled by standard instrumentation to effect sequential operations of columns **2** through **5**, allowing continuous operation of the process. Valve **11** and valve **12** are used to control the overall pressure of the system.

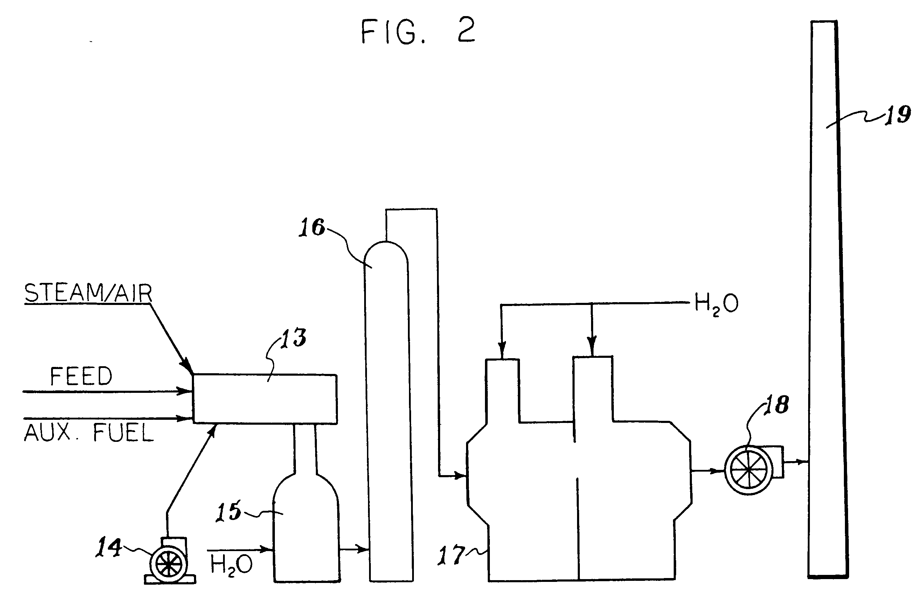

The gaseous mixture enriched in methyl chloride, is passed from surge tank **6** to a thermal oxidizer. The thermal oxidizer can be any thermal oxidizer of standard design for the thermal oxidation of chlorinated hydrocarbons. Preferred is a thermal oxidation process similar to that illustrated in Figure 2. Referring to Figure 2, the gaseous mixture enriched in methyl chloride is fed from surge tank **6** to thermal oxidizer **13**. Thermal oxidizer **13** is maintained at a temperature within a range of 870°C. to 1200°C. A preferred temperature for thermal oxidizer **13** is within a range of 980°C. to 1100°C. The temperature of thermal oxidizer **13** is controlled within the desired temperature range by providing an auxiliary fuel source, for example natural gas, to raise the temperature of the thermal oxidizer and a steam or additional air source to lower the temperature of the thermal oxidizer, as required. Fan **14** provides air to thermal oxidizer **13** at a rate adequate to ensure at least a 25 percent stoichiometric excess of oxygen in the thermal oxidizer, in relation to combustible material feed to the thermal oxidizer.

Exhaust gas from thermal oxidizer **13** is passed to quench chamber **15**, where the exhaust gas is cooled by use of water evaporation to between 80°C. and 85°C. If desired, a boiler may be included between thermal oxidizer **13** and quench chamber **15** to cool the flue gas and generate steam. The exhaust gas is than passed to HCl absorber **16**, for example, a countercurrent water scrubber or caustic scrubber. From HCl absorber **16**, the exhaust gas passes into dual chamber ionizing wet scrubber **17** of conventional design, where residual hydrogen chloride and particulates are removed from the exhaust gas. Other appropriate particulate scrubber means may be used in the process. The exhaust gas is drawn through induction fan **18** and is vented to the atmosphere through stack **19**. It is important that fan **18** maintain a negative pressure on the upstream system, since this minimizes corrosion problems typically associated with the incineration of chlorinated hydrocarbons. By "negative pressure" is meant a pressure less than atmospheric pressure.

## Claims

1. A process for treatment of a by-product gaseous mixture resulting from the reaction of silicon with methyl chloride to form methylchlorosilanes, the by-product gaseous mixture comprising methyl chloride and methane, the process comprising:
(A) contacting the by-product gaseous mixture with an adsorbent capable of reversibly adsorbing the methyl chloride, to provide a gas reduced in methyl chloride,
(B) lowering pressure of the by-product gaseous mixture in contact with the adsorbent to effect desorption of a gaseous mixture enriched in methyl chloride, and
(C) thermally oxidizing the gaseous mixture enriched in methyl chloride.

2. A process according to claim 1 where the adsorbent is silica gel.

3. A process according to claim 1 where the adsorption gauge pressure is within a range of 0.8 to 3.1 MPa (125 to 450 psi).

4. A process according to claim 1 where the temperature is within a range of 24°C. to 65°C.

5. A process according to claim 1 where thermally oxidizing the gaseous mixture enriched in methyl chloride is conducted in a thermal oxidizer at a temperature within a range of 980°C. to 1100°C. and exhaust gases from the thermal oxidizer are further treated by serially passing through a water quenching means, an HCl absorber means and an ionizing wet scrubber means, all maintained under a negative pressure.

6. A process according to claim 1 where the process is a continuous process employing more than one bed of the adsorbent.

## Patentansprüche

1. Verfahren zur Behandlung eines bei der Umsetzung von Silicium mit Methylchlorid zur Bildung von Methylchlorsilan anfallenden gasförmigen Nebenprodukt-Gemisches, das Methylchlorid und Methan enthält, durch
(A) Inberührungbringen des gasförmigen Gemisches mit einem Adsorptionsmittel, das in der Lage ist, reversibel Methylchlorid zu adsorbieren, um ein Gas mit verringertem Methylchloridgehalt auszubilden,
(B) Verringern des Druckes des in Berührung mit dem Adsorptionsmittel stehenden gasförmigen Nebenprodukt-Gemisches, um Desorption eines gasförmigen Gemisches, das mit Methylchlorid angereichert ist, zu bewirken, und
(C) thermisches Oxidieren des mit Methylchlorid angereicherten gasförmigen Gemisches.

2. Verfahren nach Anspruch 1, dadurch gekennzeichnet, daß das Adsorptionsmittel Kieselsäuregel ist.

3. Verfahren nach Anspruch 1, dadurch gekennzeichnet, daß der Adsorptionsmanometerdruck im Bereich von 0,8 bis 3,1 MPa (124 bis 450 psi) liegt.

4. Verfahren nach Anspruch 1, dadurch gekennzeichnet, daß die Temperatur im Bereich von 24°C bis 65°C liegt.

5. Verfahren nach Anspruch 1, dadurch gekennzeichnet, daß das thermische Oxidieren des mit Methylchlorid angereicherten gasförmigen Gemisches in einem thermischen Oxidierer bei einer Temperatur im Bereich von 980°C bis 1100°C ausgeführt wird und das Abgas aus dem thermischen Oxidierer weiterhin durch hintereinander Hindurchleiten durch eine Wasserabschreckeinrichtung, eine HCl-Absorbereinrichtung und einen ionisierenden Naßgaswäscher, die alle unter einem negativen Druck gehalten werden, behandelt wird.

6. Verfahren nach Anspruch 1, dadurch gekennzeichnet, daß das Verfahren als kontinuierliches Verfahren unter Verwendung von mehr als einem Bett des Adsorptionsmittels ausgeführt wird.

## Revendications

1. Procédé pour le traitement d'un mélange gazeux sous-produit résultant de la réaction de silicium avec du chlorure de méthyle pour former du méthylchlorosilane, le mélange gazeux sous-produit comprenant du chlorure de méthyle et du méthane, le procédé consistant à :
(A) mettre en contact le mélange gazeux sous-produit avec un adsorbant capable d'adsorber réversiblement le chlorure de méthyle, pour fournir un gaz appauvri en chlorure de méthyle,
(B) abaisser la pression du mélange gazeux sous-produit en contact avec l'adsorbant pour effectuer une désorption d'un mélange gazeux enrichi en chlorure de méthyle, et
(C) oxyder thermiquement le mélange gazeux enrichi en chlorure de méthyle.

2. Procédé selon la revendication 1, dans lequel l'adsorbant est du gel de silice.

3. Procédé selon la revendication 1, dans lequel la pression manométrique d'adsorption est dans la gamme de 0,8 à 3,1 MPa.

4. Procédé selon la revendication 1, dans lequel la température est dans la gamme de 24 °C à 65 °C.

5. Procédé selon la revendication 1, dans lequel l'oxydation thermique du mélange gazeux enrichi en chlorure de méthyle est effectuée dans un dispositif d'oxydation thermique à une température dans la gamme de 980 °C à 1100 °C, et les gaz d'échappement provenant du dispositif d'oxydation thermique sont ensuite traités en les faisant passer successivement au travers d'un moyen de refroidissement rapide par de l'eau, d'un moyen d'absorption de HCl et d'un moyen d'épuration par voie humide ionisant, tous maintenus sous une pression négative.

6. Procédé selon la revendication 1, qui est un procédé continu employant plus d'un lit de l'adsorbant.
